# EUROPEAN PATENT APPLICATION

(11) **EP 1 691 307 A1**
(43) Date of publication of application: **16.08.2006**
(21) Application number: 05002900.8
(22) Date of filing: 11.02.2005
(51) Int. Cl.: G06F 17/30

(54) **System and method for context specific content handling**

(71) Applicant: Research In Motion Limited, Waterloo, Ontario N2L 3W8 (CA)
(72) Inventor: Klassen, Gerhard Dietrich, Waterloo, Ontario N2T 1H7 (CA); Dunk, Craig A., Guelph, Ontario N1L 1P2 (CA)
(74) Representative: Jones Day

(57) **Abstract**

A system, method and computing device are provided for context specific content handling. An application program is executed which calls an information viewing and selecting program to select and retrieve content from a remote system. Information regarding the context from which the viewing and selecting program was called by the application program and/or information regarding the content type of the content being sought for retrieval may be provided to the information viewing and selecting program. This information is used to extend the functionality of the information viewing and selecting program beyond its pre-programmed set of functions. Different application programs may be executed and may cause different functional extensions to the information viewing and selecting program.

## Description

### BACKGROUND

The technology described in this patent document relates generally to the field of selecting and viewing information over a communication network. More particularly, a system and method for extending the functionality of information viewing and selecting software is provided which accounts for the context from which the software was executed and/or accounts for the content of the information being viewed and selected via the software.

Web browsers are common types of information selecting and viewing software applications. Other types of software may also be characterised as such. Typically, when a user of a computer, PDA, cell phone, etc., is interested in obtaining a particular remote file for storage on their computer, the user will launch the web browser and navigate to an appropriate information source, such as a web site or FTP site in order to download the file. A typical use of such a downloaded file may be to customise the operation of the device, such as a background image file, an audio file, or a ring tone, for example.

Having navigated to the appropriate source of information using the browser, the user then finds and selects the desired information. By selecting an appropriate mouse button (or other pointing device option), the user is then presented with a static list of functions provided by the web browser that may be selected for processing the selected information. For example, if the user is browsing a web site for a new background image file (i.e., digital wallpaper), then the browser will recognise that the selected file is of the type that can be used as a background image, such as a ".jpg" or ".gif' file. This knowledge is pre-programmed into the web browser by the company that wrote the web browser application. When the user selects the image file with the appropriate pointing device option, the web browser then provides a menu option to set the selected file as the computer's desktop background image. The file is then downloaded into the computer and set as the default background image. This functionality, however, is static to the web browser, which has been pre-programmed to recognise such image files and provide the menu function for setting such an image file as the background image for the computing device.

### SUMMARY

A system, method and computing device are provided for context specific content handling. An application program is executed which calls an information viewing and selecting program to select and retrieve content from a remote system. Information regarding the context from which the viewing and selecting program was called by the application program and/or information regarding the content type of the content being sought for retrieval may be provided to the information viewing and selecting program. This information is used to extend the functionality of the information viewing and selecting program beyond its pre-programmed set of functions. Different application programs may be executed and may cause different functional extensions to the information viewing and selecting program.

### BRIEF DESCRIPTION OF THE DRAWINGS

Figure 1 is a block diagram of an information viewing and selecting system having extended functionality based upon context activation and content type;
Figure 2 is a flow chart depicting an exemplary set of method steps for context specific content handling in the system of Figure 1; and
Figure 3 is a block diagram of an exemplary computing device that may be utilised as part of the system and method described herein.

### DETAILED DESCRIPTION OF THE DRAWINGS

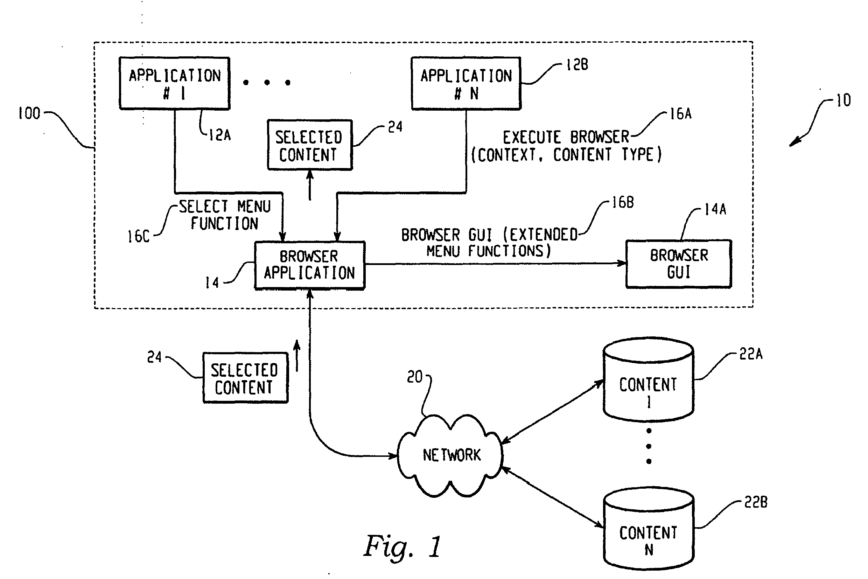

Figure 1 is a block diagram of an information viewing and selecting system 10 having extended functionality based upon context activation and content type. In this system 10, a web browser application 14 (or other form of information viewing and selecting device) is enhanced with additional functionality for processing selected information based upon one or both of the context in which the web browser application is launched and/or the content type of the information that is being sought by a user of the device.

The system includes a computing device 100, which may be a desktop or laptop computer system, or it could be a personal digital assistant (PDA), a cellular telephone, a video game console, or any other type of computing device (either fixed or mobile) preferably having access to a wide area network 20 for retrieving remote content 22A, 22B. The computing device 100 preferably includes several software applications 12A, 12B, a browser application 14 (or other type of information viewing and selecting device), and a communication channel for connecting to a wide area network 20, such as the Internet. The browser application 14 also provides a graphical user interface 14A for use in navigating, selecting and viewing information retrieved via the communication channel. The device 100 may also include an operating system, device drivers, a variety of other software applications, and a variety of hardware elements, such as a processor, memory, a network interface (either wired or wireless), a radio transceiver, a display, a keyboard, a pointing device, etc.

When a user of the device 100 desires to select and retrieve a particular type of content for a particular application-specific purpose, the user first executes the particular software application 12A, 12B on the device 100. For example, the computing device 100 may be a mobile wireless device capable of sending and receiving data and also transmitting and receiving voice calls. In such a device it is desirable to have a custom ring tone to signify an incoming telephone call. Such custom ring tones are widely available for downloading via the Internet. In this instance, the user may select to execute an application 12A that is used to customise certain telephony aspects of the computing device 100, including setting a particular ring tone.

From this telephony application 12A, the user is provided with an option to launch the device's web browser in order to find and select a particular ring tone to set as the default ring tone for the device 100. When this option is selected, the device 100 is programmed such that the application 12A, or the operating system, passes application context information and/or content type information 16A to the web browser when it is called for execution by the application. This context and content type information is then used by the web browser to extend the functionality provided through the browser's graphical user interface (GUI) 14A. For the ring tone example discussed previously, this context and content type information may be used to add a menu function to the browser GUI such as "Set as Default Ring Tone." In this example, the context information may inform the browser that the user is seeking a file to use as the default ring tone and the content type information informs the browser of the type of files that may serve this purpose. This extended function would appear on the browser menu automatically when the user selected a file having the proper type as dictated by the content type information passed to the browser upon execution. Although discussed herein in reference to content type matching for a particular contextual purpose, the system and method may provide for any type of rule-based extension of the browser's functionality.

Once the user has discovered and selected a particular item of content 24, this information is returned to the browser 14 and then passed along to the calling application 12A, 12B for use in whatever context was programmed into the application when it called the browser 14. Other applications can then be launched, and for each of these applications, other extended functionality may be provided through the browser 14 depending upon the context and/or content type being sought when the browser is executed.

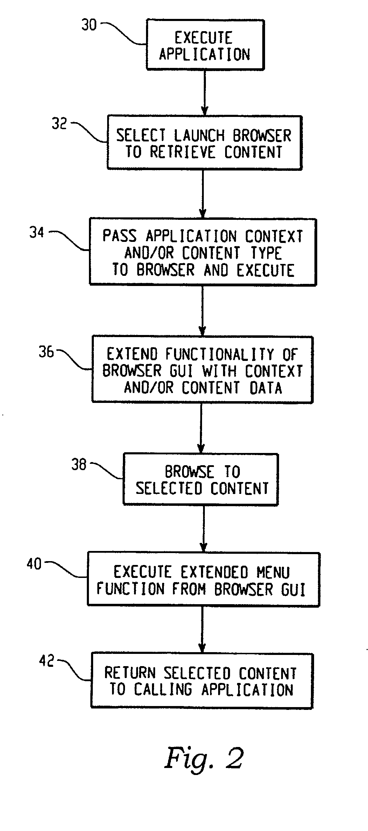

Figure 2 is a flow chart depicting an exemplary set of method steps for context specific content handling in the system of Figure 1. In step 30 a particular application is executed by the computing device 100. From this application, the web browser is launched in step 32 to retrieve particular content for the device. During this launch process, the application passes certain types of information to the web browser for use in extending the browser's functionality. In step 34, context information and/or content type information is passed from the application (and/or the operating system) to the web browser. The context information may be, for example, information indicating the desired use of the information, and or text information to be used to extend the browser's user interface, etc., or any other type of information regarding the context in which the browser was launched. In addition, or in lieu thereof, content type information may also be provided to the web browser regarding the types of files that are to be retrieved. Thus, for example, if the user is seeking a new ring tone file for the computing device to signal an incoming phone call, then the content type may be limited to known types (or a specific type of) audio file that may be used as a ring tone indicator.

The context/content information from step 34 is utilised by the web browser (and/or the operating system) in step 36 to extend the functionality of the browser's graphical user interface to provide for application-specific functions in relation to the context from which the browser is called and/or the content type of the information sought for retrieval. After the browser has been successfully launched then at step 38 the user browses to the desired content. By an appropriate selection mechanism on the computing device 100, such as a mouse, thumbwheel device, rocker switch, etc., the browser then displays an extended menu on the device that includes enhanced functionality related to the application-specific purpose for which the browser was executed. The user then selects an item from the extended menu that corresponds to the application-specific purpose and the selected content is then retrieved and provided to the calling application in step 42 for programming into the device per its intended use.

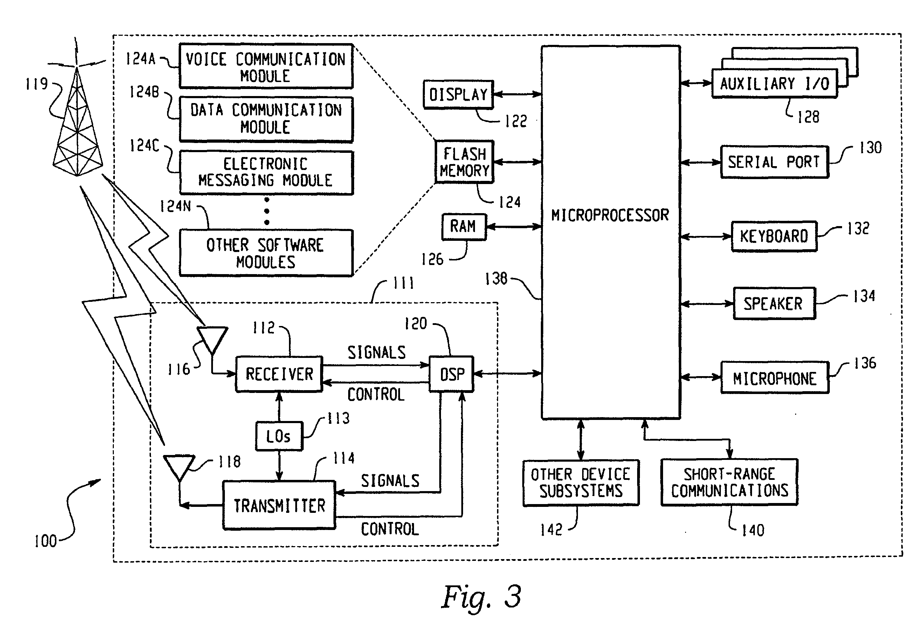

Figure 3 is a block diagram of an exemplary computing device that may incorporate the system and method described herein. In this example, the computing device is a mobile communication device, such as a wireless PDA, cellular telephone, two-way paging computer, etc. The mobile communication device 100 includes a processing subsystem 138, a communications subsystem 111, a short-range communications subsystem 140, a memory subsystem 124, 126, and various other device subsystems and/or software modules 142. The mobile communication device 100 also includes a user interface, which may include a display 122, a serial port 130, keyboard 132, a speaker 134, a microphone 136, one or more auxiliary input/output devices 128, and/or other user interface devices.

The processing subsystem 138 controls the overall operation of the mobile communication device 100. Operating system software executed by the processing subsystem 138 may be stored in a persistent store, such as a flash memory 124, but may also be stored in other types of memory devices in the memory subsystem, such as a read only memory (ROM) or similar storage element. In addition, system software, specific device applications, or parts thereof, may be temporarily loaded into a volatile store, such as a random access memory (RAM) 126. Communication signals received by the mobile communication device 100 may also be stored to RAM 126.

The processing subsystem 138, in addition to its operating system functions, enables execution of software applications 124 on the device 100. A predetermined set of applications that control basic device operations, such as data and voice communications, may be installed on the device 100 during manufacture. In addition, a personal information manager (PIM) application, including an electronic messaging application, may be installed on the device. The PIM may, for example, be operable to organize and manage data items, such as email, calendar events, voice mails, appointments, and task items. The PIM application may also be operable to send and receive data items via the wireless network 119. Additional applications may also be provided on the device, including an information viewing and selecting application, such as a web browser, and other types of applications that may, for example, be used to customize the operation of the device.

Communication functions, including data and voice communications, are performed through the communication subsystem 111, and possibly through the short-range communications subsystem 140. The communication subsystem 111 includes a receiver 112, a transmitter 114 and one or more antennas 116, 118. In addition, the communication subsystem 111 also includes a processing module, such as a digital signal processor (DSP) 120 or other processing device(s), and local oscillators (LOs) 113. The specific design and implementation of the communication subsystem 111 is dependent upon the communication network in which the mobile communication device 100 is intended to operate. For example, a mobile communication device 100 may include a communication subsystem 111 designed to operate within the Mobitex™ mobile communication system, the DataTAC™ mobile communication system, a GSM network, a GPRS network, a UMTS network, and/or an EDGE network.

Network access requirements vary depending upon the type of communication system. For example, in the Mobitex and DataTAC networks, mobile communication devices are registered on the network using a unique personal identification number or PIN associated with each device. In UMTS and GSM/GPRS networks, however, network access is associated with a subscriber or user of a device. A GPRS device therefore requires a subscriber identity module, commonly referred to as a SIM card, in order to operate on a GSM/GPRS network.

When required network registration or activation procedures have been completed, the mobile communication device 100 may send and receive communication signals over the communication network 119. Signals received by the antenna 116 from the communication network 119 are routed to the receiver 112, which provides signal amplification, frequency down conversion, filtering, channel selection, etc., and may also provide analog to digital conversion. Analog-to-digital conversion of the received signal allows the DSP to perform more complex communication functions, such as demodulation and decoding. In a similar manner, signals to be transmitted to the network 119 are processed (e.g., modulated and encoded) by the DSP 120 and are then provided to the transmitter 114 for digital to analog conversion, frequency up conversion, filtering, amplification and transmission to the communication network 119 (or networks) via the antenna 118.

In addition to processing communication signals, the DSP 120 provides for receiver 112 and transmitter 114 control. For example, gains applied to communication signals in the receiver 112 and transmitter 114 may be adaptively controlled through automatic gain control algorithms implemented in the DSP 120.

In a data communication mode, a received signal, such as a text message or web page download, is processed by the communication subsystem 111 and input to the processing device 138. The received signal is then further processed by the processing device 138 for output to a display 122, or alternatively to some other auxiliary I/O device 128. A device user may also compose data items, such as email messages, using a keyboard 138 and/or some other auxiliary I/O device 128, such as a touchpad, a rocker switch, a thumb-wheel, or some other type of input device. The composed data items may then be transmitted over the communication network 119 via the communication subsystem 111.

In a voice communication mode, overall operation of the device is substantially similar to the data communication mode, except that received signals are output to a speaker 134, and signals for transmission are generated by a microphone 136. Alternative voice or audio I/O subsystems, such as a voice message recording subsystem, may also be implemented on the device 100. In addition, the display 122 may also be utilized in voice communication mode, for example to display the identity of a calling party, the duration of a voice call, or other voice call related information.

The short-range communications subsystem 140 enables communication between the mobile communication device 100 and other proximate systems or devices, which need not necessarily be similar devices. For example, the short-range communications subsystem 140 may include an infrared device and associated circuits and components, or a Bluetooth™ communication module to provide for communication with similarly-enabled systems and devices.

## Claims

1. An application-specific method of retrieving remote content using a web browser, the method comprising the steps of:
executing an application program;
from the application program, calling the web browser application to retrieve content from a remote system, wherein the web browser application provides a set of functions for processing selected content;
providing information to the web browser regarding the context from which it was called by the application program;
extending the functionality of the web browser using the context information by adding at least one function to the set of functions that is dependent upon the context information; and
using the web browser to select and retrieve the remote content and processing the selected remote content using the added function.

2. The method of claim 1, further comprising the steps of:
executing a second application program;
from the second application program, calling the web browser application to retrieve content from a remote system, wherein the web browser application provides a set of functions for processing selected content;
providing information to the web browser regarding the context in which it was called by the second application program;
extending the functionality of the web browser using the context information by adding a second function distinct from the at least one function to the set of functions that is dependent upon the context information regarding the second application program; and
using the web browser to select and retrieve the remote content and processing the selected remote content using the second function.

3. The method of claim 2, further comprising the steps of:
executing the application program and the second application program simultaneously; and
executing two instances of the web browser simultaneously, one instance for each of the application program and the second application program;
wherein the two instances of the web browser provide a different set of functions depending on whether they were called by the application program or the second application program.

4. The method according to one of the previous claims, further comprising the steps of:
opening a communication channel between the web browser and a remote site; and
accessing remote content stored on the remote site via the communication channel.

5. The method of claim 4, wherein the communication channel is the Internet.

6. The method according to one of the claims 4 to 5, wherein the remote site is an FTP site.

7. The method according to one of the claims 4 to 5, wherein the remote site is a web site.

8. The method according to one of the previous claims, further comprising the steps of:
the web browser providing a graphical menu of the set of functions for processing selected content;
adding a menu selection to the menu of the set of functions corresponding to the at least one function; and
in response to selecting and retrieving the remote content, displaying the menu selection including the at least one function for processing the selected remote content.

9. The method according to one of the previous claims, further comprising the steps of:
providing information to the web browser regarding the type of content being sought by the calling application; and
extending the functionality of the web browser using the content type information by selectively providing for the selection of the at least one function dependent upon the content type of the selected content.

10. The method according to one of the previous claims, wherein the application program and the web browser are executed by a common computing device.

11. The method of claim 10, wherein the computing device is a mobile communication device having both voice and data capabilities.

12. The method according to one of the claims 10 to 11, wherein the remote content is used to customize the operation of the computing device.

13. The method of according to one of the previous claims, wherein the information is provided to the web browser from the application program.

14. The method according to one of the previous claims, wherein the information is provided to the web browser through an operating system.

15. A system for retrieving remote content using a web browser, comprising:
means for executing an application program;
means for calling the web browser application to retrieve content from a remote system,
wherein the web browser application provides a set of functions for processing selected content; means for providing information to the web browser regarding the context from which it was called by the application program;
means for extending the functionality of the web browser using the context information by adding at least one function to the set of functions that is dependent upon the context information; and
means for selecting and retrieving the remote content and processing the selected remote content using the added function.

16. The system of claim 15, further comprising:
means for executing a second application program;
means for calling the web browser application to retrieve content from a remote system,
wherein the web browser application provides a set of functions for processing selected content; means for providing information to the web browser regarding the context in which it was called by the second application program;
means for extending the functionality of the web browser using the context information by adding a second function distinct from the at least one function to the set of functions that is dependent upon the context information regarding the second application program; and
means for selecting and retrieving the remote content and processing the selected remote content using the second function.

17. The system of claim 16, further comprising:
means for executing the application program and the second application program simultaneously; and
means for executing two instances of the web browser simultaneously, one instance for each of the application program and the second application program;
wherein the two instances of the web browser provide a different set of functions depending on whether they were called by the application program or the second application program.

18. The system according to one of the claims 15 to 17, further comprising:
a communication channel between the web browser and a remote site; and
means for accessing remote content stored on the remote site via the communication channel.

19. The system of claim 18, wherein the communication channel is the Internet.

20. The system according to one of the claims 18 to 19, wherein the remote site is an FTP site.

21. The system according to one of the claims 18 to 19, wherein the remote site is a web site.

22. The system according to one of the claims 15 to 21, further comprising:
means for providing a graphical menu of the set of functions for processing selected content; means for adding a menu selection to the menu of the set of functions corresponding to the at least one function; and
means responsive to selecting and retrieving the remote content for displaying the menu selection including the at least one function for processing the selected remote content.

23. The system according to one of the claims 15 to 22, further comprising:
means for providing information to the web browser regarding the type of content being sought by the calling application; and
means for extending the functionality of the web browser using the content type information by selectively providing for the selection of the at least one function dependent upon the content type of the selected content.

24. The system according to one of the claims 15 to 23, wherein the application program and the web browser are executed by a common computing device.

25. The system of claim 24, wherein the computing device is a mobile communication device having both voice and data capabilities.

26. The system according to one of the claims 24 to 25, wherein the remote content is used to customize the operation of the computing device.

27. The system according to one of the claims 15 to 26, wherein the information is provided to the web browser from the application program.

28. The system according to one of the claims 15 to 27, wherein the information is provided to the web browser through an operating system.

29. A computing device capable of retrieving remote content using information viewing and selecting software, comprising:
an application program that calls the information viewing and selecting software to retrieve content from a remote system, wherein the information viewing and selecting software provides a set of functions for processing selected content;
a software interface for providing information to the information viewing and selecting software regarding the context from which it was called by the application program;
a graphical user interface that provides extended functionality for the information viewing and selecting software using the context information by adding at least one function to the set of functions that is dependent upon the context information; and
wherein the information viewing and selecting software selects and retrieves the remote content and processes the selected remote content using the added function.

30. The computing device of claim 29, further comprising:
a second application program that calls the information viewing and selecting software to retrieve content from a remote system, wherein the information viewing and selecting software provides a set of functions for processing selected content;
the software interface providing information to the web browser regarding the context in which it was called by the second application program;
the graphical user interface providing extended functionality of the information viewing and selecting software using the context information by adding a second function distinct from the at least one function to the set of functions that is dependent upon the context information regarding the second application program; and
wherein the information viewing and selecting software selects and retrieves the remote content and processes the selected remote content using the second function.

31. The computing device of claim 30, further comprising:
a processing device that executes the application program and the second application program simultaneously; and
wherein the processing device executes two instances of the information viewing and selecting software simultaneously, one instance for each of the application program and the second application program;
wherein the two instances of the information viewing and selecting software provide a different set of functions depending on whether they were called by the application program or the second application program.

32. The computing device according to one of the claims 29 to 31,, further comprising:
a communication channel between the information viewing and selecting software and a remote site; and
software that accesses remote content stored on the remote site via the communication channel.

33. The computing device of claim 32, wherein the communication channel is the Internet.

34. The computing device according to one of the claims 32 to 33, wherein the remote site is an FTP site.

35. The computing device according to one of the claims 32 to 33, wherein the remote site is a web site.

36. The computing device according to one of the claims 29 to 35, further comprising:
a graphical menu of the set of functions for processing selected content;
an interface that adds a menu selection to the menu of the set of functions corresponding to the at least one function; and
a display that displays the menu selection including the at least one function for processing the selected remote content.

37. The computing device according to one of the claims 29 to 36, further comprising:
the software interface providing information to the information viewing and selecting software regarding the type of content being sought by the calling application; and
the graphical user interface extending the functionality of the information viewing and selecting software using the content type information by selectively providing for the selection of the at least one function dependent upon the content type of the selected content.

38. The computing device according to one of the claims 29 to 37, wherein the computing device is a mobile communication device having both voice and data capabilities.

39. The computing device according to one of the claims 29 to 38, wherein the remote content is used to customize the operation of the computing device.

40. The computing device according to one of the claims 29 to 39, wherein the information is provided to the information viewing and selecting software from the application program.

41. The computing device according to one of the claims 29 to 40, wherein the information is provided to the information viewing and selecting software through an operating system.

42. The computing device according to one of the claims 29 to 41, wherein the information viewing and selecting software is a web browser program.

## Amended claims

### Amended claims in accordance with Rule 86(2) EPC.

**1.** An application-specific method of retrieving remote content (22) using a web browser (14), the method comprising the steps of:
executing an application program (12);
from the application program (12), calling the web browser application (14) to retrieve content (22) from a remote system for the application program (12), wherein the web browser application (14) provides a set of functions for processing retrieved content;
providing information to the web browser (14) regarding the context from which it was called by the application program (12), the context information specifying the intended use for retrieved content;
extending the functionality of the web browser (14) using the context information by adding at least one function to the set of functions that is dependent upon the context information;
retrieving selected content (24) from the remote system and processing the retrieved content (24) using the added function of the web browser (14); and
passing the processed content from the web browser (14) to the application program (12).

**15.** A system (10) for retrieving remote content (22) using a web browser (14), comprising:
means for executing an application program (12);
means for calling the web browser application (14) to retrieve content (22) from a remote system for the application program (12), wherein the web browser application (14) provides a set of functions for processing retrieved content;
means for providing information to the web browser (14) regarding the context from which it was called by the application program (12), the context information specifying the intended use for retrieved content;
means for extending the functionality of the web browser (14) using the context information by adding at least one function to the set of functions that is dependent upon the context information;
means for retrieving selected content (24) from the remote system and processing the retrieved content (24) using the added function; and
means for passing the processed content to the application program (12).

**29.** A computing device (100) capable of retrieving remote content (22) using information viewing and selecting software, comprising:
an application program (12) that calls the information viewing and selecting software (14) to retrieve content from a remote system for the application program (12), wherein the information viewing and selecting software (14) provides a set of functions for processing retrieved content;
a software interface for providing information to the information viewing and selecting software (14) regarding the context from which it was called by the application program (12), the context information specifying the intended use for the retrieved content;
a graphical user interface (14A) that provides extended functionality for the information viewing and selecting software (14) using the context information by adding at least one function to the set of functions that is dependent upon the context information; and
wherein the information viewing and selecting software (14) retrieves selected content (24) from the remote system and processes the retrieved content (24) using the added function, the information viewing and selecting software (14) passing the processed content to the application program (12).
